# EUROPÄISCHE PATENTSCHRIFT

(11) **EP 0 666 631 B1**
(45) Veröffentlichungstag und Bekanntmachung des Hinweises auf die Patenterteilung: **15.12.1999**
(21) Anmeldenummer: 95250024.7
(22) Anmeldetag: 31.01.1995
(51) Int. Cl.: H02H 9/02, H02H 9/04, H02H 9/00

(54) **Speisesystem für einen Feldbus**
Field bus power supply system
Système d'alimentation pour bus de secteur

(30) Priorität: 04.02.1994 DE 4403961
(43) Veröffentlichungstag der Anmeldung: 09.08.1995
(73) Patentinhaber: Hartmann & Braun GmbH & Co. KG, 65760 Eschborn (DE)
(72) Erfinder: Westerfeld, Peter, D-61169 Friedberg (DE)
(74) Vertreter: Presting, Hans-Joachim, Dipl.-Ing.

(56) Entgegenhaltungen:
- DE-A- 2 458 590
- GB-A- 2 238 191
- ADVANCES IN INSTRUMENTATION AND CONTROL, Bd. 46, Nr. PART 02, 1.Januar 1991, Seiten 1799-1813, XP000347609 LINDNER K P ET AL: "FIELDBUS IN HAZARDOUS AREAS"

## Beschreibung

Die Erfindung betrifft ein Speisesystem für einen Feldbus in explosionsgefährdeten verfahrenstechnischen Anlagen.

Feldbusse sind elektrische Einrichtungen zur Kommunikation zwischen im Feldbereich angeordneten Feldgeräten wie Sensoren, Aktoren und Meßumformer einerseits und im Wartenbereich angeordneten Steuerungs- und Regelungssystemen andererseits. Üblicherweise ist ein Feldbus als Zweidrahtleitung ausgeführt, die gleichzeitig zur Übertragung der Speiseleistung der angeschlossenen Feldgeräte dient. Die Kommunikation erfolgt analog über eine übliche 0/4...20 mA-Stromschleife oder digital, beispielsweise mittels FSK-Modulation oder mit einer kombiniert analog/digitalen Signalübertragung.

Zur Verwendung in explosionsgefährdeten Anlagen sind an elektrische Einrichtungen besondere Anforderungen gestellt, um einen möglichen Explosionsunfall auszuschließen. Diese Anforderungen sind in sogenannten Zündschutzarten zusammengefaßt. Wegen der einfachen Handhabung bei Installation, Wartung und Reparatur wird für elektrische Einrichtungen an Stromkreisen im Feldbereich die Zündschutzart "Eigensicherheit", im folgenden Ex'i' genannt, bevorzugt.

Aus der Zeitschrift "Automatisierungstechnische Praxis 33 (1991) 9", Seiten 469-473, sind eine Reihe von Konzepten für Feldbussysteme für den Einsatz in explosionsgefährdeten Bereichen bekannt. Im Bild 1a ist die Struktur eines ersten Feldbussystems gezeigt, das ausgehend von einer sogenannten prozeßnahen Komponente, im folgenden PNK genannt, eine einzige Zweidrahtleitung zur Kommunikation und Speisung der Feldgeräte vorsieht, an die die einzelnen Feldgeräte angeschlossen sind. Das Feldbussystem ist ausschließlich in Ex'i' ausgeführt. Die Besonderheit dieser Zündschutzart liegt darin, daß es während des laufenden Betriebes gestattet ist, den in Ex'i' ausgeführten Stromkreis an beliebiger Stelle zu öffnen, kurzzuschließen und/oder zu erden. Die Leistung in einem Ex'i'-Stromkreis ist derart begrenzt, daß bei o.g. Handlungen sowohl zündende Funken als auch explosionsauslösende Erwärmungen von Bauelementen innerhalb des Ex'i'-Stromkreises sicher vermieden werden. Aus der Leistungsbegrenzung resultiert, daß, wie aus der Zeitschrift "Automatisierungstechnische Praxis 34 (1992) 11", Seiten 617-622, bekannt ist, weniger als 10 reale Feldgeräte an einen derart ausgeführten Feldbus in Bereichen der Explosionsgruppe IIC anschließbar sind. Die Begrenzung auf 10 Feldgeräte an einen Feldbus reicht aber nicht aus, da neben Analogsignalen für viele Meßumformergeräte oder Stellumformergeräte auch gleichzeitig Binärsignale für Kontakte, Näherungsinitiatoren und Magnetventile zu übertragen sind.

In Bild 1b ist die Struktur eines zweiten Feldbussystems gezeigt, bei dem die Kommunikation über eine Ex'i' ausgeführte Zweidrahtleitung realisiert ist und die Speisung der einzelnen Feldgeräte über jeweils separate Zuleitungen für die Hilfsenergie erfolgt. Das bedeutet zwar, daß einerseits eine Vielzahl von Feldgeräten an einen Feldbus anschließbar ist, aber andererseits für n Feldgeräte n+1 Leitungspaare aus dem Wartenbereich an die Feldgeräte zu führen sind. Um die beschriebenen Vorzüge des in Ex'i' ausgeführten Feldbusses nutzen zu können, müssen zwangsläufig auch die Stromkreise der erforderlichen n Speiseleitungspaare in der Zündschutzart Ex'i' ausgeführt sein.

Ein drittes Feldbussystem ist in Bild 1c gezeigt, das eine Kombination aus dem ersten und dem zweiten Feldbussystem darstellt, wobei eine Mehrzahl von Feldgeräten blockweise mit einer separat heranzuführenden und einzuspeisenden Hilfsenergie versorgt wird. Zur Kommunikation sind mehrere Blöcke an einen Feldbus geschaltet. Jedoch ist weiterhin eine Vielzahl von Leitungspaaren zwischen dem Wartenbereich und den Blöcken von Feldgeräten erforderlich.

Weiterhin ist in Bild 1d ein viertes Feldbussystem dargestellt, bei dem zwar eine Zweidrahtleitung zur Kommunikation und Speisung der Feldgeräte genügt, aber jedem Feldgerät eine Sicherheitsbarriere zugeordnet werden muß, um das Feldgerät an einem Ex'i'-Stromkreis betreiben zu können. Der Feldbus selbst ist als nichteigensicherer Stromkreis ausgeführt. Die im Feldbereich angeordneten Sicherheitsbarrieren sind zusätzlich druckfest gekapselt, Ex'd', also mit mechanisch aufwendig gefertigten, paßgenauen Ummantelungen versehen. Jede Barriere umfaßt jeweils Mittel zur Strombegrenzung, zur Spannungsbegrenzung, zum Potentialausgleich und zum thermischen Schutz für nachgeschaltete Bauelemente. Die Montage von Barrieren ist bisher nur im nicht-explosionsgefährdeten Bereich gestattet. Darüber hinaus ist jede Umrüstung, Aufrüstung oder sonstige Manipulation an Betriebsmitteln der Zündschutzarten Ex'e' und Ex'd' ausschließlich im abgeschalteten Zustand gestattet.

Die PNK ist bei angeschlossenen, eigensicheren Stromkreisen üblicherweise mit Mitteln zur Potentialtrennung sowie Mitteln zur Begrenzung von Strom und Spannung ausgestattet.

Darüber hinaus ist aus der GB-A-2238191 ein Speisesystem für einen Feldbus in explosionsgefährdeten Anlagen bekannt, bei dem die Kommunikation und die Speisung der angeschlossenen Feldgeräte über das selbe Adempaar erfolgt und dem Mittel zur Strom- und Spannungsbegrenzung zugeordnet sind. Die Mittel zur Strom- und Spannungsbegrenzung sind in explosionsungefährdeten Wartenbereich untergebracht.

Der Erfindung liegt daher die Aufgabe zugrunde, ein Speisesystem für einen Feldbus in explosionsgefährdeten Bereichen anzugeben, bei dem der Verkabelungsaufwand minimal ist, der auf die Verwendung weniger, konstruktiv einfacher Zündschutzarten beschränkt ist und der den Anschluß einer Vielzahl von Feldgeräten sowie deren freizügige Manipulation im Sinne der Schutzart Eigensicherheit im laufenden Betrieb gestattet.

Ausgehend von einem Feldbus, bei dem die Kommunikation und die Speisung der angeschlossenen Feldgeräte über dasselbe Adernpaar erfolgt, wird diese Aufgabe erfindungsgemäß dadurch gelöst, daß die Mittel zur Strom- und Spannungsbegrenzung räumlich getrennt angeordnet und über einen nichteigensicheren Stromkreis verbunden sind.

Im Wartenbereich ist eine PNK vorgesehen, die mit Mitteln zur Spannungs- oder Strombegrenzung und zur galvanisch getrennten Einspeisung der Hilfsenergie für die Feldgeräte ausgestattet ist. Im Feldbereich ist ein Verteiler mit einem Eingangsklemmenpaar und einer Vielzahl von Ausgangsklemmenpaaren vorgesehen. Die Ausgangsklemmenpaare sind eingeteilt in eigensichere und optionale nichteigensichere Anschlußpaare. Den eigensicheren Anschlußpaaren sind jeweils Mittel zur Strom- oder Spannungsbegrenzung zugeordnet.

Optional sind der Feldbus und die PNK redundant ausgeführt. In weiterer Ausgestaltung der Erfindung sind mehrere Verteiler kaskadiert an einen Feldbus anschaltbar.

Vorteilhafterweise genügt eine Zweidrahtleitung zwischen der PNK im Wartenbereich und dem abgesetzten Verteiler im Feldbereich zur Kommunikation einer im Wartenbereich vorgesehenen Steuerung mit allen einem Feldbus zugeordneten Feldgeräten und zur Speisung aller über den Verteiler an den Feldbus angeschlossenen Feldgeräte. Der Feldbus ist als nichteigensicherer Stromkreis und der Verteiler in der Schutzart Ex'e' ausgeführt, so daß neben der feldgeräteseitig geforderten Schutzart Ex'i' auf mechanisch aufwendig zu realisierende Schutzarten verzichtet werden kann.

Die maximale Anzahl anschließbarer Feldgeräte ist unabhängig von der Leistungsbegrenzung in eigensicheren Stromkreisen und ist nur noch durch das kaskadierbare Leistungsvermögen der PNK bestimmt. Bei Spannungsbegrenzung in der PNK kann der Strom im Feldbus hohe Werte annehmen, während bei Strombegrenzung in der PNK di Spannung hohe Werte annehmen kann, so daß sehr hohe Leistungen ins Feld übertragen werden können.

Von besonderem Vorteil ist, daß mit dem erfindungsgemäßen Speisesystem Feldgeräte, die der Schutzart "Eigensicherheit" genügen, zusammen mit Feldgeräten in konventionellen Zündschutzarten, wie z. B. "erhöhte Sicherheit", Überdruckkapselung, Sandkapselung, druckfeste Kapselung und Vergußkapselung, an denselben Feldbus anschließbar sind. Dadurch können kurze Übertragungswege zwischen beiden Feldgerätearten realisiert werden.

Die Erfindung wird nachstehend anhand von Ausführungsbeispielen näher erläutert. Es zeigen:
- Fig. 1: Darstellung eines Speisesystems für einen Feldbus mit Spannungsbegrenzung in der Warte und Strombegrenzung im Feld.
- Fig. 2: Darstellung wie Fig. 1, jedoch mit redundant ausgeführtem Feldbus und PNK,
- Fig. 3: Darstellung wie Fig. 1 mit zusätzlichen Feldgeräten in konventionellen Zündschutzarten.
- Fig. 4: Darstellung eines Speisesystems für einen Feldbus mit Strombegrenzung in der Warte und Spannungsbegrenzung
- Fig. 5: Darstellung wie Fig. 4 mit redundant ausgeführtem Feldbus und PNK,
- Fig. 6: Darstellung wie Fig. 4 mit zusätzlichen Feldgeräten in konventionellen Zündschutzarten.

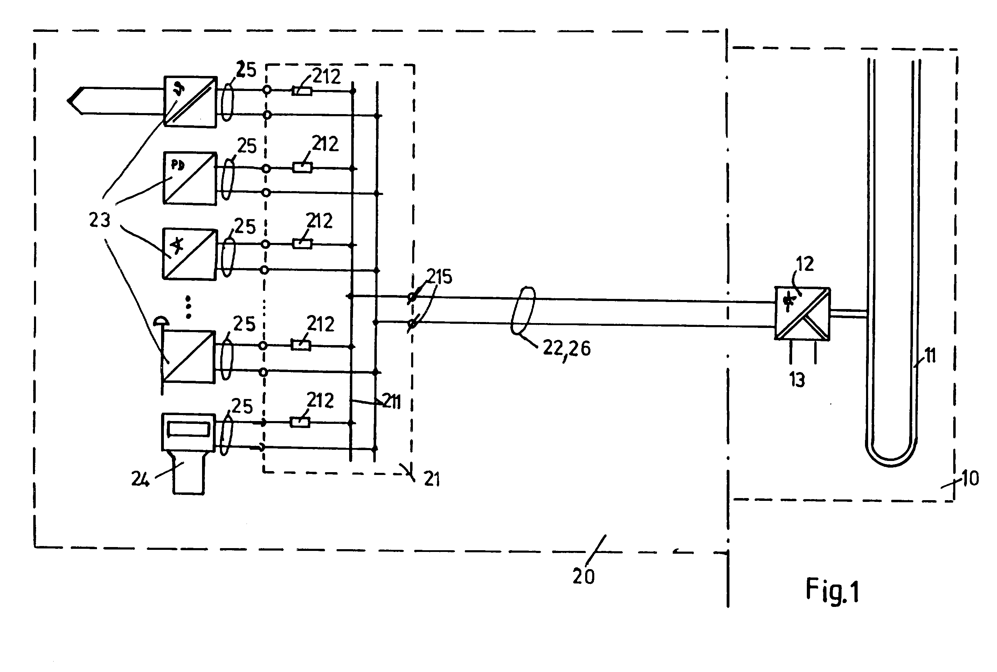

Gemäß Fig. 1 ist im Wartenbereich 10 eine PNK 12 vorgesehen, die jeweils galvanisch voneinander getrennte Stromkreise für die Einspeisung der Hilfsenergie 13 für den Wartenbus 11 und für den Feldbus 22 aufweist. An den Wartenbus 11 sind Einrichtungen zur Prozeßsteuerung, -regelung und -visualisierung anschließbar. Der Feldbus 22 ist als nichteigensicherer Stromkreis 26 ausgeführt und im Feldbereich 20 (Zone 1) an einen Verteiler 21 über Klemmen in erhöhter Sicherheit 215, angeschlossen. Diese Anschlußklemmen sind gegen Selbstlockern und Selbstlösen gesichert. Der Verteiler 21 ist mit Sammelleitern 211 ausgestattet, die an den Feldbus 22 angeschlossen sind. Der Verteiler 21 weist darüber hinaus eine Mehrzahl von Anschlüssen für eigensichere Stromkreise 25 auf, denen jeweils Mittel zur Strombegrenzung (ohm'sch oder elektronisch) zugeordnet sind. Die Mittel zur Strombegrenzung sind in der Fig. 1 als ohmsche Widerstände 212 ausgeführt und an die Sammelleiter 211 angeschlossen. Im Feldbereich sind darüber hinaus stationäre eigensichere Feldgeräte 23 dargestellt, die über eigensichere Stromkreise 25 an den Verteiler 21 angeschlossen sind. Darüber hinaus ist ein portables eigensicheres Feldgerät 24, ein sogenanntes hand held terminal, dargestellt, das ebenfalls über einen eigensicheren Stromkreis 25 mit Hilfe von Steckkontakten an den Verteiler 21 anschließbar ist.

Den Erfordernissen der Zündschutzart Eigensicherheit wird durch galvanische Trennung und Spannungsbegrenzung in dem PNK 12 sowie Strombegrenzung im Verteiler 21 realisiert. Dabei genügt für eine Vielzahl von Feldgeräten eine einzige galvanische Trennung im Wartenbereich und die einfache Ausführung der Spannungsbegrenzung in der PNK. Vorzugsweise ist der Spannungsbegrenzung eine Spannungsregelung vorgeschaltet.

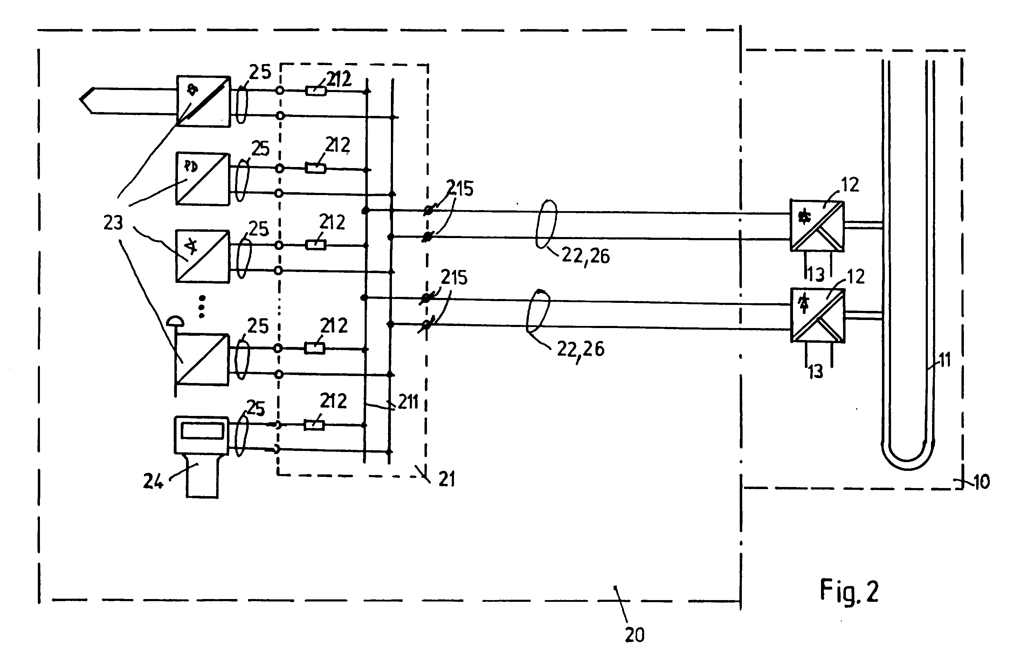

Unter Verwendung gleicher Mittel und gleicher Bezugszeichen ist in Fig. 2 ein Speisesystem für einen Feldbus dargestellt, bei dem die PNK 12 und der Feldbus 22 redundant ausgeführt sind. Es sind zwei PNK 12 vorgesehen, die jeweils separat mit Hilfsenergie 13 versorgt sind und jeweils einen galvanisch getrennten Anschluß an den Wartenbus 11 aufweisen. Darüber hinaus weist jede PNK 12 einen separaten, galvanisch getrennten Stromkreis auf, an den jeweils ein Feldbus 22 angeschlossen ist. Im Verteiler 21 sind die Anschlüsse der redundanten Feldbusse 22 parallel an die Sammelleiter 211 über Anschlußklemmen in erhöhter Sicherheit 215 angeschlossen.

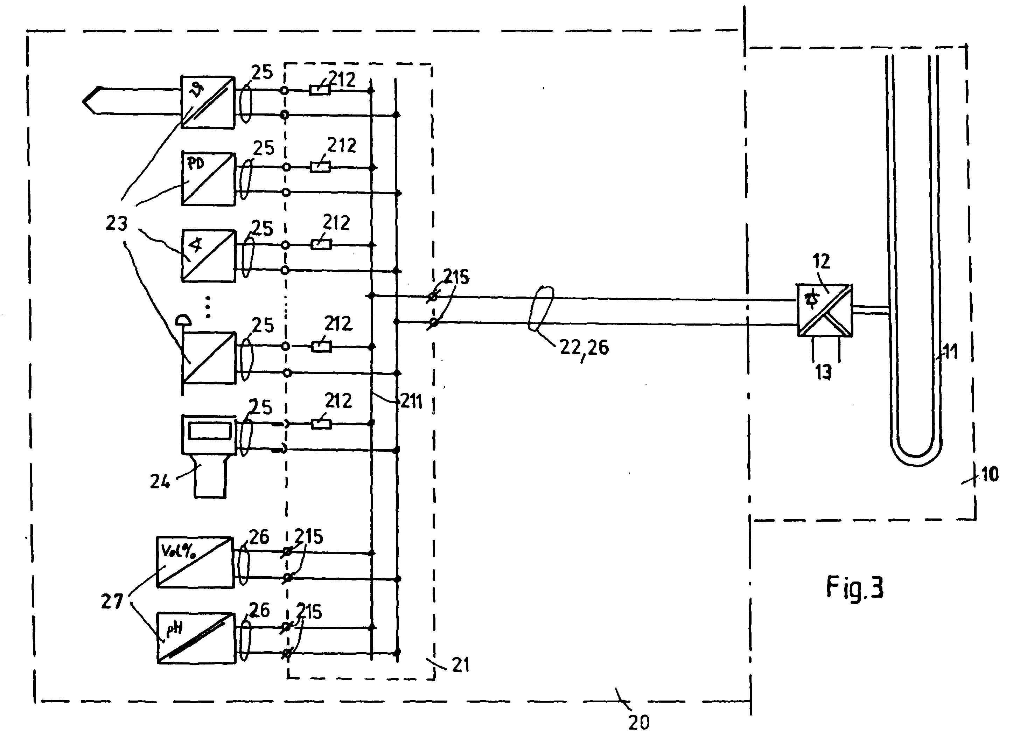

In weiterer Ausgestaltung der Erfindung ist in Fig. 3 unter Verwendung gleicher Mittel und Bezugszeichen der Verteiler 21 um Anschlüsse in erhöhter Sicherheit für nichteigensichere Stromkreise ergänzt. Die Anschlüsse in erhöhter Sicherheit 215 sind unter Verzicht auf Mittel zur Strombegrenzung direkt an die Sammelleiter 211 angeschlossen. Im Feldbereich sind stationäre Feldgeräte in konventionellen Zündschutzarten über nichteigensichere Stromkreise 26 an Anschlüsse 215 in erhöhter Sicherheit des Verteilers 21 angeschlossen. Bei diesen Feldgeräten kann es sich z.B. um Analysegeräte handeln. Auf diese Weise ist es möglich, an denselben Feldbus 22 sowohl Feldgeräte der Schutzart Eigensicherheit 23 und 24 als auch Feldgeräte 27 in konventionellen Zündschutzarten anzuschließen.

Weiterhin ist vorgesehen, den Verteiler 21 zu kaskadieren. Dabei sind die Sammelleiter 211 mindestens zweier Verteiler 21 über Anschlußklemmen in erhöhter Sicherheit 215 mit einem nichteigensicheren Stromkreis 26 miteinander verbunden.

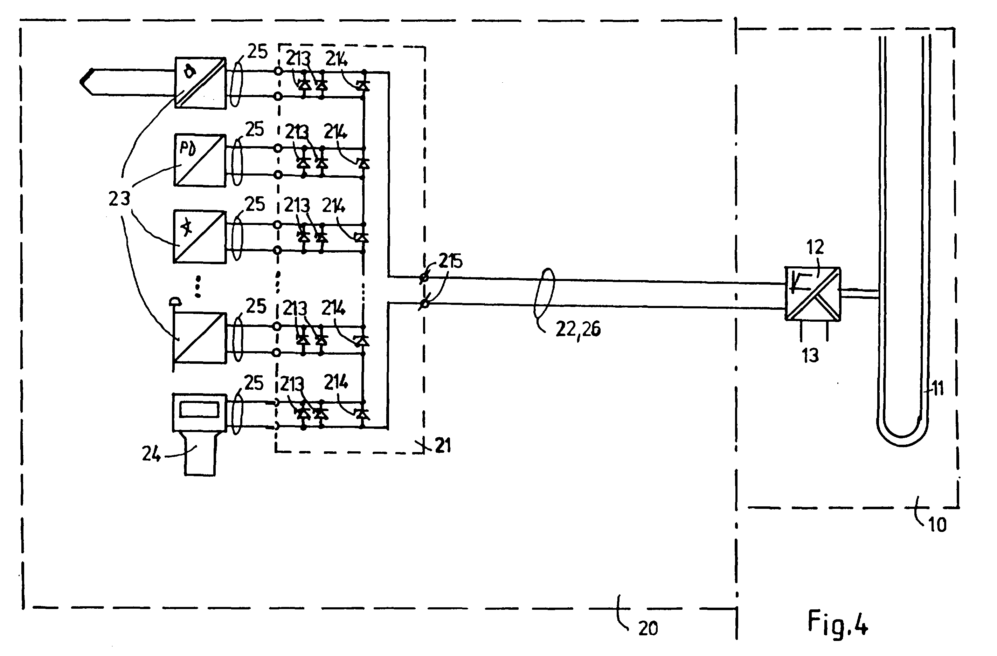

In Fig. 4 ist ein Speisesystem für einen Feldbus dargestellt, bei dem im Wartenbereich 10 eine PNK 12 über galvanisch getrennte Anschlüsse mit einem Wartenbus 11 verbunden ist. Die PNK 12 ist galvanisch getrennt mit Hilfsenergie 13 versorgt. Darüber hinaus weist die PNK 12 einen galvanisch getrennten Stromkreis mit Strombegrenzung auf, an den der Feldbus 22 angeschlossen ist. Vorzugsweise weist die PNK 12 im Feldbereich 20 ist ein Verteiler 21 vorgesehen, der eine Vielzahl von in Reihe geschalteten Interlockdioden 214 und Spannungsbegrenzeranordnungen 213 aufweist, die in den Stromkreis des Feldbusses 22 eingeschleift sind. Die Spannungsbegrenzeranordnungen sind mit Zenerdioden als Spannungsbegrenzerdioden 213 realisiert. Die Interlockdioden 214 sind Zenerdioden mit einer kleineren Zenerspannung als die Spannungsbegrenzerdioden 213. Die Interlockdioden 214 dienen dazu, bei unbelegten eigensicheren Feldgeräteeingang 25 den Feldbusstrom durchzuschalten, ihre Zenerspannung ist größer als die Betriebsspannung der Feldgeräte zuzüglich einem vorgegebenen maximalen Spannungsabfall auf der Leitung 25. Jeder Spannungsbegrenzeranordnung ist ein eigensicherer Stromkreis 25 zugeordnet, an dem ein eigensicheres Feldgerät anschließbar ist. Dazu gehören stationäre eigensichere Feldgeräte 23 sowie portable eigensichere Feldgeräte 24, z.B. hand held terminals. Der Feldbus 22 ist in Form einer Zweidrahtleitung als nichteigensicherer Stromkreis 26 ausgeführt.

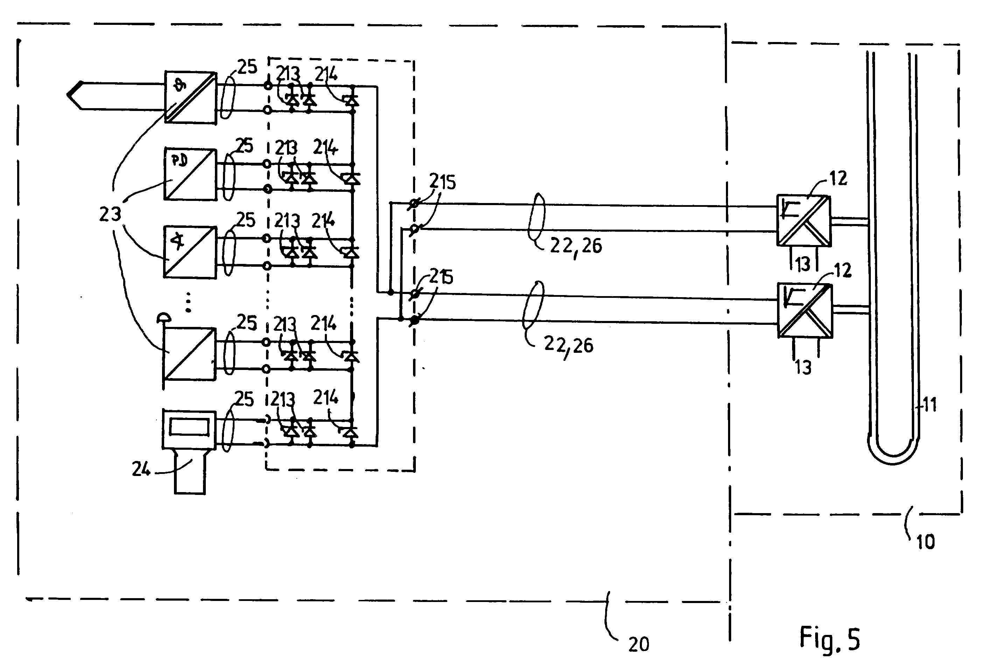

Unter Verwendung gleicher Mittel und Bezugszeichen ist in Fig. 5 ein Speisesystem für einen Feldbus dargestellt, bei dem der Feldbus 22 und die PNK 12 redundant ausgeführt sind. Jede PNK 12 weist eine separate Einspeisung für die Hilfsenergie 13 auf sowie einen separaten galvanisch getrennten Anschluß an den Wartenbus 11. Darüber hinaus sind in jeder PNK 12 in gleicher Weise Mittel zur Strombegrenzung bzw. Stromregelung in einem galvanisch getrennten Stromkreis realisiert. Die redundanten Feldbusse 22 sind als nichteigensichere Stromkreise 26 ausgeführt und im Verteiler 21 parallelgeschaltet.

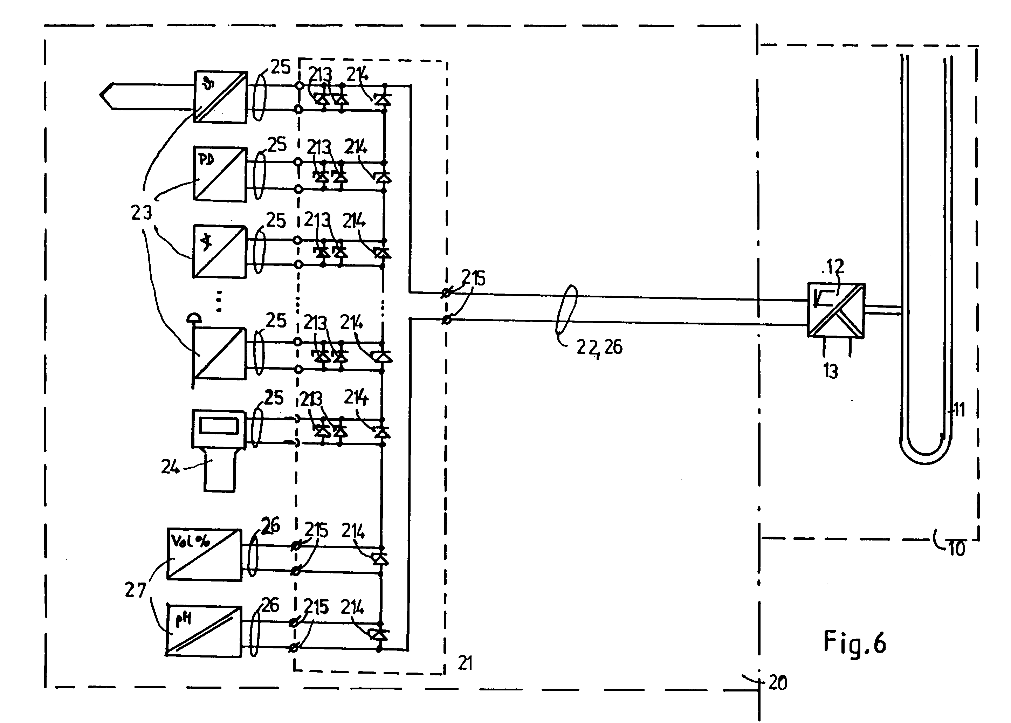

In weiterer Ausgestaltung der Erfindung ist gemäß Fig. 6 vorgesehen, stationäre Feldgeräte 26 in konventionellen Zündschutzarten über nichteigensichere Stromkreise 26 über weitere Anschlußklemmen in erhöhter Sicherheit 26 an den Verteiler 21 anzuschließen. Die bauartgemäßen Unterschiede zwischen Anschlüssen in erhöhter Sicherheit und Anschlüssen in Eigensicherheit äußern sich in der Anzahl der den Spannungsbegrenzerschaltungen zugeordneten Dioden. Während zum Anschluß von Feldgeräten in konventionellen Zündschutzarten eine Interlockdiode 214 genügt, sind Spannungsbegrenzerschaltungen für eigensichere Stromkreise der Kategorie "ib" redundante Diodenanordnungen 213 erforderlich.

### Bezugszeichenliste

- 10: Wartenbereich (nicht explosionsgefährdet)
- 11: Wartenbus
- 12,: PNK, prozeßnahe Komponenten
- 13: Hilfsenergie
- 20: Feldbereich (Zone 1)
- 21: Verteiler
- 211: Sammelleiter
- 212: Strombegrenzungswiderstand
- 213: Spannungsbegrenzerdioden
- 214: Interlockdioden
- 215,: Anschlußklemmen mit erhöhter Sicherheit
- 22: Feldbus
- 23: stationäres eigensicheres Feldgerät
- 24: portables eigensicheres Feldgerät
- 25: eigensicherer Stromkreis
- 26,: nichteigensicherer Stromkreis
- 27: stationäres Feldgerät in konventionellen Zündschutzarten

## Patentansprüche

1. Speisesystem für einen eigensicheren Feldbus (25) in explosionsgefährdeten Anlagen, bei dem die Kommunikation und die Speisung der angeschlossenen eigensicheren Feldgeräte (23, 24) über dasselbe Adernpaar erfolgt und der über einen Verteiler (21) und einen nichteigensicheren Feldbus (22) mit einer prozeßnahen Komponente (12) im Wartenbereich verbunden ist, und Mittel zur Strom- und Spannungsbegrenzung für den eigensicheren Feldbus (25) räumlich getrennt derart angeordnet sind, daß die prozeßnahe Komponente (12) mit Mitteln zur Spannungs- oder Strombegrenzung ausgestattet ist und daß der Verteiler bei Spannungsbegrenzung in der prozeßnahen Komponente mit den Mitteln zur Strombegrenzung oder bei Strombegrenzung in der prozeßnahen Komponente mit den Mitteln zur Spannungsbegrenzung ausgestattet ist.

2. Speisesystem nach Anspruch 1,
dadurch gekennzeichnet,
daß der nichteigensichere Feldbus (22) und die prozeßnahe Komponente (12) redundant ausgeführt sind.

3. Speisesystem nach einem der Ansprüche 1 und 2,
dadurch gekennzeichnet,
daß der Verteiler (21) kaskadierbar ist.

## Claims

1. A supply system for an intrinsically safe fieldbus (25) in installations at risk of explosion, in which system the interconnection and supply of the connected intrinsically safe field apparatuses (23, 24) is effected by means of the same pair of wires and which is connected with a process-oriented component (12) in the control area via a distributor (21) and a non-intrinsically safe fieldbus (22), and means for limiting the current and voltage for the intrinsically safe fieldbus (25) are arranged in spatially separate manner in such a way that the process-oriented component (12) is provided with means for voltage or current limitation and that, in the event of voltage limitation being provided in the process-oriented component, the distributor is provided with the means for current limitation or, in the event of current limitation being provided in the process-oriented component, the distributor is provided with the means for voltage limitation.

2. A supply system according to claim 1,
characterised in that
the non-intrinsically safe fieldbus (22) and the process-oriented component (12) are designed so as to be redundant.

3. A supply system according to either one of claims 1 and 2,
characterised in that
the distributor (21) is cascadable.

## Revendications

1. Système d'alimentation pour un bus de champ (25) à sécurité intrinsèque dans des installations en danger d'explosions, dans lequel la communication et l'alimentation des appareils de champ (23,24) à sécurité intrinsèque raccordés, sont réalisées sur la même paire de fils, et qui est relié, dans le domaine de la surveillance, par l'intermédiaire d'un distributeur (21) et d'un bus de champ (22) non sécurisé intrinsèquement, à un composant (12) adapté au processus, et des moyens pour limiter le courant et la tension pour le bus de champ (25) à sécurité intrinsèque étant agencés, de façon séparée spatialement, de sorte que le composant (12) adapté au processus est équipé de moyens pour limiter la tension et le courant, et le distributeur étant équipé, pour la limitation de la tension dans le composant adapté au processus, des moyens pour limiter le courant ou, pour la limitation du courant dans le composant adapté au processus, des moyens pour limiter la tension.

2. Système d'alimentation selon la revendication 1,
caractérisé en ce que le bus de champ (22) non sécurisé intrinsèquement et le composant (12) adapté au processus sont réalisés de façon redondante.

3. Système d'alimentation selon l'une des revendications 1 et 2,
caractérisé en ce que le distributeur (21) peut être réalisé en cascade.
